**Europäisches Patentamt**

**European Patent Office**

**Office européen des brevets**

(11) Veröffentlichungsnummer: **0 548 687 A1**

## (12) EUROPÄISCHE PATENTANMELDUNG

(21) Anmeldenummer: **92121039.9**

(22) Anmeldetag: **10.12.92**

(51) Int. Cl.5: **C08L 21/00**

(30) Priorität: **23.12.91 DE 4142763**

(43) Veröffentlichungstag der Anmeldung:
**30.06.93 Patentblatt 93/26**

(84) Benannte Vertragsstaaten:
**DE FR GB IT**

(71) Anmelder: **BAYER AG**

**W-5090 Leverkusen 1 Bayerwerk(DE)**

(72) Erfinder: **Ooms, Pieter, Dr.**
**Doerperhofstrasse 16**
**W-4150 Krefeld(DE)**
Erfinder: **Schrage, Heinrich, Dr.**
**Doerperhofstrasse 31**
**W-4150 Krefeld(DE)**
Erfinder: **Buysch, Hans-Josef, Dr.**
**Brandenburger Strasse 28**
**W-4150 Krefeld(DE)**
Erfinder: **Loix, René, Dr.**
**Wölfelweg 8**
**W-6906 Leimen(DE)**
Erfinder: **Graf, Hans-Joachim, Dr.**
**Billingstrasse 14**
**W-6800 Mannheim 81(DE)**

(54) **Verwendung von Phenolharze als Homogenisatoren für Kautschukvulkanisate.**

(57) Neue, nicht härtbare Novolack-artige Phenolharze aus Rückstandsharzen der Bisphenol-A-Herstellung und Gemischen wenigstens teilweise chlorsubstituierter $C_4$-$C_8$-Kohlenwasserstoffe finden Verwendung als Homogenisatoren für Kautschukvulkanisate.

Die Erfindung betrifft neue, nicht härtbare Novolak-artige Phenolharze aus Rückstandsharzen der Bisphenol-A-Herstellung und Gemischen wenigstens teilweise chlorsubstituierter $C_4$-$C_8$-Kohlenwasserstoffe (Nebenprodukte der Butadienchlorierung) sowie die Verwendung als Homogenisatoren für Kautschukvulkanisate.

Novolake sind bekanntlich schmelzbare, in einer Reihe organischer Lösungsmittel lösliche, nichtselbsthärtende Polyphenole, deren aromatische Kerne durch Alkylidengruppen verknüpft sind. Sie können aus Phenolen und Carbonylverbindungen in Gegenwart saurer Katalysatoren hergestellt werden, wobei man üblicherweise ein Molverhältnis Carbonylverbindung/Phenol von maximal 1, vorzugsweise von maximal 0,75, einhält; vgl. "Methoden der Organischen Chemie" (Houben-Weyl), Bd. 14/2, Georg Thieme Verlag, Stuttgart 1963, S. 193 ff.

Unter "Novolak-artigen Phenolharzen" im Sinne der Erfindung sollen Phenolharze verstanden werden, deren verknüpfende Glieder nicht auf Alkylidengruppen beschränkt sind, die aber im wesentlichen frei von zur Selbstvernetzung befähigten Gruppen - hauptsächlich also frei von Hydroxymethylgruppen - sind.

Bei der Chloroprenherstellung durch Chlorierung von Butadien entstehen neben Chloropren unerwünschte Nebenprodukte mit 4 bis 8, vorzugsweise 4 oder 8, C-Atomen und mindestens 3, vorzugsweise mindestens 4 funktionellen Gruppen aus der Reihe bestehend aus Chloratomen und C=C-Doppelbindungen. Typische Nebenprodukte bestehen aus Mischungen aus 20 bis 60 Gew.-% 1,2,3,4-Tetrachlorbutan, 10 bis 60 Gew.-% Dichloroctadienen, 3 bis 20 Gew.-% Trichlorbutenen, 2 bis 8 Gew.-% Tetrachloroctenen und bis zu 15 Gew.-% Dichlorbutenen, Dichlorbutanen und Hexachlorbutanen. Die saubere Trennung der einzelnen Komponenten aus diesen Mischungen durch Destillation ist aufgrund der nahe beieinanderliegenden Siedepunkte nicht möglich; aus diesem Grund wurden die Nebenprodukte bislang nicht weiterverwendet, sondern verbrannt.

Bei der Bisphenol-A-Herstellung aus Aceton und Phenol entstehen neben p,p-Bisphenol-A unerwünschte Nebenprodukte mit 1 bis 4, vorzugsweise 1 bis 3 phenolischen OH-Gruppen. Typische Rückstandsharze nach Isolierung des p,p-Bisphenol-A bestehen aus Mischungen von 5 bis 20 Gew.-% Phenol, 1 bis 37 Gew.-% Bisphenolen, 5 bis 40 Gew.-% Chromanen, 1 bis 25 Gew.-% Indanen, 1 bis 20 Gew.-% Trisphenolen und bis 10 Gew.-% anderen Produkten in geringen Anteilen. Die saubere Trennung der einzelnen Komponenten aus diesen Mischungen durch Kristallisation ist nicht möglich; aus diesem Grund ist es schwierig, diese Nebenprodukte weiter zu verwerten.

Aufgabe der Erfindung war es daher, die wirtschaftlich und ökologisch unerwünschte Verbrennung zu vermeiden und alle Komponenten der Nebenproduktgemische in wertvolle Produkte zu überführen.

Überraschenderweise wurde nun gefunden, daß die beschriebenen Nebenprodukte der Chloroprenherstellung sich mit den beschriebenen Rückstandsharzen der Bisphenol-A-Herstellung unter Verwendung von geeigneten Katalysatoren umsetzen lassen, so daß das erhaltene Phenolharz nach Abtrennung der flüchtigen Komponenten und gegebenenfalls von Lösungsmittel ohne Rücksicht auf seine heterogenen Bausteine unter Verzicht auf aufwendige Reinigungsschritte isoliert werden kann. Außerdem wurde gefunden, daß sich solche Novolak-artigen Phenolharze hervorragend als Homogenisatoren für Kautschukvulkanisate eignen und zu Produkten mit verbesserter Haftung und erhöhter Klebrigkeit führen.

Die Umsetzung von ungesättigten Kohlenwasserstoffen mit Phenolen zu Phenolharzen ist aus der US-PS 3 644 537 bekannt; allerdings bestand dort weder das Problem Mischungen verschiedener Komponenten umzusetzen, noch werden dort Eisenkatalysatoren erwähnt.

Die Herstellung von Phenolharzen aus Phenolen und Gemischen chlorsubstituierter Kohlenwasserstoffe (EP 444 274) und die Verwendung als Verstärkerharze in Kautschukvulkanisate (EP 444 275) wurde bereits beschrieben.

Gegenstand der Erfindung sind also neue Novolak-artige Phenolharze aus der Umsetzung von Bisphenol-A-Rückstandsharzen mit Gemischen wenigstens teilweise chlorsubstituierter $C_4$-$C_8$-Kohlenwasserstoffe in Gegenwart von für Friedel-Crafts-Alkylierungen geeigneten Katalysatoren.

Gegenstand der Erfindung ist auch die Verwendung von Phenolharzen, erhältlich durch Friedel-Crafts-Alkylierung von A) mindestens einem Phenol oder Bisphenol-A-Harz mit B) mindestens einer Verbindung mit 4 bis 8 C-Atomen und 2 bis 4, vorzugsweise 3 oder 4, funktionellen Gruppen aus der Reihe Chloratome und C=C-Doppelbindungen als Homogenisatoren für Kautschukvulkanisate.

Bevorzugte Phenole A umfassen ein- und zweiwertige einkernige Phenole, die neben den phenolischen Hydroxylgruppen keine anderen Substituenten aufweisen, wie unsubstituiertes Phenol selbst, Brenzcatechin, Resorcin, Hydrochinon; einwertige $C_1$-$C_6$-Alkylphenole wie Kresole, Xylenole, Ethylphenole, Propylphenole, Hexylphenole; einwertige Phenylphenole wie Hydroxybiphenyle; ein- und zweikernige $C_6$-$C_{18}$-Bisphenole wie Dihydroxybiphenyle, Bis-(4-hydroxyphenyl)-methan, 2,2-Bis-(4-hydroxyphenyl)-propan und Bis-(4-hydroxyphenyl)-sulfid oder diese Phenole enthaltenden Gemische.

Besonders bevorzugt ist ein Gemisch aus einem oder mehreren Phenolen und einem Rückstandsharz einer üblichen Bisphenol-A-Herstellung aus Aceton und Phenol, bestehend aus 5 bis 20 Gew.-% Phenol, 1 bis 37 Gew.-% Bisphenolen, 5 bis 40 Gew.-% Chromanen, 1 bis 25 Gew.-% Indanen, 1 bis 20 Gew.-% Trisphenolen und bis 10 Gew.-% anderen Produkten in geringen Anteilen (die Anteile der Komponenten addieren sich zu jeweils 100 Gew.-%).

Die bei der Chloroprenherstellung durch Chlorierung von Butadien neben Chloropren entstehenden Nebenprodukte enthalten 4 bis 8, vorzugsweise 4 oder 8, C-Atome und mindestens 3, vorzugsweise mindestens 4 funktionelle Gruppen aus der Reihe bestehend aus Chloratomen und C = C-Doppelbindungen. Typische Nebenprodukte bestehen aus Mischungen aus 20 bis 60 Gew.-% 1,2,3,4-Tetrachlorbutan, 10 bis 60 Gew.-% Dichloroctadienen, 3 bis 20 Gew.-% Trichlorbutenen, 2 bis 8 Gew.-% Tetrachloroctenen und bis zu 15 Gew.-% Dichlorbutenen, Dichlorbutanen und Hexachlorbutanen. Der Chlorgehalt solcher Gemische beträgt in der Regel 40 bis 70, vorzugsweise 45 bis 60 Gew.-%, bezogen auf Gemisch. Diese beschriebenen Nebenproduktgemische eignen sich hervorragend als Verbindungen B im Sinne dieser Erfindung. Selbstverständlich sind auch die Einzelkomponenten - unabhängig von ihrer Herkunft - sowie Mischungen dieser Komponenten als auch durch Destillation angereicherte Nebenproduktgemische für diesen Zweck geeignet.

Für die Herstellung der erfindungsgemäß zu verwendenden Phenolharze werden die Ausgangsprodukte in der Regel entsprechend einem Äquivalentverhältnis von phenolischem OH der Phenole und/oder des Bisphenol-A-Harzes A zu funktionellen Gruppen der Verbindungen B (Chlor bzw. C = C-Doppelbindung) von 1:10 bis 10:1, vorzugsweise 1:4 bis 8:1, insbesondere 1:2 bis 5:1, eingesetzt.

Für die Herstellung der erfindungsgemäß zu verwendenden Phenolharze geeignete Katalysatoren umfassen alle chemischen Stoffe, die Friedel-Crafts-Alkylierungen beschleunigen, also Protonsäuren und Lewis-Säuren, wie z.B. Schwefelsäure, Chlorwasserstoff, Phosphorsäure, Aluminiumchlorid, metallisches Eisen sowie Verbindungen des Eisens, vorzugsweise des 2- und 3-wertigen Eisens, wie z.B. die Bromide, die Nitrate, die Sulfate, die Oxalate, insbesondere die Chloride, Zinnchlorid, Bortrifluorid, Titantetrachlorid, Zinkchlorid und Zinksulfat. Zink- und Eisensalze werden bevorzugt; Eisentrichlorid wird besonders bevorzugt. Die Reaktion kann auch ohne Katalysatorzusatz durchgeführt werden, weil der während der Reaktion entstehende Chlorwasserstoff ebenfalls katalytisch wirkt.

Übliche Katalysatormengen liegen bei Salzen im allgemeinen bei 0,05 bis 10, vorzugsweise 0,1 bis 3 Gew.-%, bei Säuren im allgemeinen bei 0,05 bis 10, vorzugsweise 0,1 bis 5 Gew.-%, jeweils bezogen auf Verbindungen B.

Vorzugsweise wird das Verfahren zur Herstellung der erfindungsgemäß zu verwendenden Phenolharze in Abwesenheit von Lösungsmitteln durchgeführt. Es ist jedoch ohne weiteres möglich, unter Reaktionsbedingungen inerte organische Lösungsmittel, vorzugsweise solche mit einem Siedepunkt über 120, insbesondere über 180 °C, wie Nitrobenzol, Dichlorbenzole, Benzonitril, Chlornaphthaline mitzuverwenden. Falls man das Verfahren in Lösung durchführen möchte, wird man das organische Lösungsmittel in Mengen von 5 bis 100 Gew.-%, bezogen auf die Summe von Phenol A und Verbindungen B, einsetzen.

Das Verfahren ist exotherm und kann deshalb, sobald es in Gang gekommen ist, ohne Wärmezufuhr von außen ablaufen. Um einen möglichst vollständigen Reaktionsablauf und damit einen möglichst geringen Chlorgehalt des Endprodukts zu erreichen, kann es sinnvoll sein, das Reaktionsgemisch nach Beendigung der Zugabe der Komponenten noch 2 bis 20 Stunden bei Temperaturen von 40 bis 280 °C, vorzugsweise 80 bis 250 °C, insbesondere 120 bis 220 °C zu belassen; das Ende der Reaktion läßt sich an der Beendigung der Chlorwasserstoffentwicklung ablesen.

Praktisch läßt sich das Verfahren beispielsweise so durchführen, daß man das geschmolzene Phenol und/oder Bisphenol-A-Harz A und den Katalysator vorlegt und das Gemisch B, gegebenenfalls gelöst in organischem Lösungsmittel, zudosiert. Um eine gute Durchmischung der Komponenten zu erreichen, kann man rühren. Nach beendeter Reaktion kann man Lösungsmittel (falls vorhanden), überschüssige Phenole und andere flüchtige Komponenten abtrennen, vorzugsweise durch Destillation, gegebenenfalls bei vermindertem Druck. Das hierbei gewonnene Destillat kann für weitere Umsetzungen wiederverwendet werden.

Um einen möglichst geringen Chlorgehalt des Rückstandsharzes zu erreichen, kann es sinnvoll sein, nach beendeter Reaktion eine Extraktion mit Wasser vorzunehmen oder chloridfreisetzende Verbindungen wie z.B. Phosphorsäure, phosphorige Säuren, Polyphosphorsäuren, Phosphonsäuren, Phosphite, Polycarbonsäuren, Phthalsäuren, Carbonsäuren oder Schwefelsäure zuzusetzen und dann erst die Destillation durchzuführen.

Die erfindungsgemäß zu verwendenden Phenolharze enthalten pro Mol aus Phenol und/oder Bisphenol-A-Harz-A stammender Einheiten 0,2 bis 1, vorzugsweise 0,4 bis 0,8 Mol aus Komponente B stammende Einheiten.

Die erfindungsgemäß zu verwendenden Phenolharze besitzen im allgemeinen Erweichungspunkte (nach DIN 53 244) von 50 bis 200°C, OH-Zahlen von 100 bis 550 und als Zahlenmittel $\overline{M}_n$ bestimmte Molekulargewichte von 250 bis 2000 (dampfdruckosmometrisch in Methanol und in Aceton bestimmt, wobei der niedrigere Wert als der korrekte angesehen wird).

Die beschriebenen Phenolharze werden erfindungsgemäß als Homogenisatoren für Kautschukvulkanisate verwendet. Diesen Vulkanisaten können Natur- und Synthesekautschuke sowie bevorzugt Verschnitte davon zugrundeliegen.

Bevorzugte Synthesekautschuke sind beispielsweise bei W. Hofmann, Kautschuk-Technologie, Gentner Verlag, Stuttgart 1980, beschrieben. Sie umfassen u.a.

BR - Polybutadien

ABR - Butadien/Acrylsäure-$C_1$-$C_4$-alkylester-Copolymerisate mit Acrylester-Gehalten von 5 bis 60, vorzugsweise von 15 bis 50 Gew.-%

CR - Polychloropren

IR - Polyisopren

IIR - Isobutylen/Isopren-Copolymerisate

SBR - Styrol/Butadien-Copolymerisate mit Styrolgehalten von 1 bis 60, vorzugsweise von 20 bis 50 Gew.-%

NBR - Butadien/Acrylnitril-Copolymerisate mit Acrylnitrilgehalten von 5 bis 60, vorzugsweise 10 bis 50 Gew.-% sowie die entsprechenden teil- oder vollhydrierten Copolymerisate (HNBR)

EPDM - Ethylen/Propylen/Dien-Copolymerisate

und Mischungen dieser Kautschuke.

Die erfindungsgemäß zu verwendenden Phenolharze eignen sich besonders als Homogenisatoren von Mischungen wenig oder nicht miteinander verträglicher Kautschuke, die bei der Herstellung von Reifen und technischen Artikeln Verwendung finden.

Kautschuke besitzen Glasübergangstemperaturen unter 20°C, vorzugsweise unter 0°C, bestimmt im Torsionsschwingungsversuch nach DIN 53 445. Die Dosierung der Phenolharze beträgt ca. 1 bis 50, vorzugsweise 3 bis 15 Gew.-%, bezogen auf Kautschuk.

Die Vulkanisation kann in Gegenwart üblicher Vulkanisiermittel erfolgen; Beispiele hierfür umfassen elementaren Schwefel, Schwefelspender, Ethylenthioharnstoff, cyclische Thiuramdisulfide, Peroxide, Vernetzerharze, Chinonderivate, Diisocyanate, Dithionite, bifunktionelle Bunte-Salze, Diazoverbindungen, Dinitrosoverbindungen, Nitrene, Dithiole, Bisnitrilimine, Bishydrosilane.

Neben den Vulkanisiermitteln verwendet man gewöhnlich Vulkanisationsbeschleuniger, wie z.B. Thiuramderivate, Guanidin-, Mercapto- und Sulfenamidbeschleuniger (Thiazolderivate), daneben Aktivatoren wie Zinkoxid, Magnesiumoxid, Calciumoxid sowie Fettsäuren, wie z.B. Stearinsäure.

Füllstoffe können in üblicher Weise mitverwendet werden. Der bevorzugte Füllstoff ist Ruß. Weichmacher, wie z.B. Mineralöl, können ebenfalls eingesetzt werden. Art und Menge der Füllstoffe und Weichmacher werden so gewählt, daß die Härte der Vulkanisate sowie die sonstigen gewünschten Eigenschaften, wie z.B. Abrieb, Rutschfestigkeit und Hysterese, den Praxisanforderungen genügen.

Stabilisatoren gegen thermischen und oxidativen Angriff können die Vulkanisate gegen Alterung schützen. Bevorzugte Stabilisatoren sind sterisch gehinderte Phenolderivate und Derivate des Phenylendiamins sowie Kondensationsprodukte von Anilinen und Ketonen.

Die erfindungsgemäße Verwendung führt zur Verbesserung einiger wichtiger mechanischer Eigenschaften der Vulkanisate, wie z.B. der Weiterreißfestigkeitswerte und des Moduls 100. Die Einarbeitung der Homogenisatorharze kann mittels der für die Herstellung von Kautschukmischungen üblichen Einrichtungen, z.B. mit Innenmischern und Walzwerken erfolgen.

Die Prozentangaben der nachfolgenden Beispiele beziehen sich jeweils auf das Gewicht; Teile sind Gewichtsteile.

Beispiele:

Als Chlorkohlenwasserstoffgemisch wurde eine Mischung von den bei der Butadienchlorierung anfallenden Nebenprodukten mit einem Chlorgehalt von 55 % und einem C=C-Doppelbindungsgehalt von 0,575 Mol Doppelbindungen pro 100 g Produkt eingesetzt Das Produktgemisch bestand zu etwa 35 % aus Tetrachlorbutan, 40 % Dichloroctadienen, 7 % Trichlorbutenen, 8 % Tetrachloroctenen und 10 % anderen Produkten in geringeren Anteilen.

Als Rückstandsharze einer Bisphenol-A-Herstellung wurde ein Gemisch aus etwa 11 Gew.-% Phenol, 37 Gew.-% Bisphenolen, 26 Gew.-% Chromanen, 16 Gew.-% Indanen, 5 Gew.-% Trisphenol und 5 Gew.-% anderen Produkten in geringeren Anteilen eingesetzt.

## Beispiel 1

Zu einer Schmelze von 360 g Rückstandsharz aus der Bisphenol-A-Produktion, 225 g Phenol, 45 g Isopropylphenol (Destillat aus einem vorhergehenden Ansatz) und 3,6 g wasserfreiem Eisentrichlorid wurden bei 125°C 180 g des Chlorkohlenwasserstoffgemisches aus der Butadienchlorierung unter Rühren zugetropft, wobei eine HCl-Entwicklung stattfand. Anschließend wurde noch 8 Stunden auf 220°C erhitzt auf 100°C abgekühlt und mit Natriumhydroxid neutralisiert. Nach Abdestillieren der flüchtigen Komponente (330 g) verblieben als Rückstand 385 g Phenolharz vom Erweichungspunkt 108°C; OH-Zahl: 236; Säurezahl: 3; Chlorgehalt 1,30%.

## Beispiel 2

Durchführung wie Beispiel 1, jedoch ohne Neutralisierung. Nach Abtrennen von 344 g Destillat verbleiben als Rückstand 358 g Phenolharz vom Erweichungspunkt 116°C; OH-Zahl: 236; Säurezahl: 10; Chlorgehalt: 0,76 %.

## Beispiel 3

Durchführung wie Beispiel 1, jedoch wurde statt Neutralisierung mit Wasser extrahiert. Nach Abdestillieren der flüchtigen Komponente (355 g) verbleiben als Rückstand 378 g Phenolharz vom Erweichungspunkt 105°C; OH-Zahl: 224; Säurezahl: 3,5; Chlorgehalt: 0,47 %.

## Beispiel 4

Durchführung wie Beispiel 1, jedoch wurde statt Neutralisierung 2,7 g Phosphorsäure zugegeben. Man erhält 320 g Destillat und als Rückstand 382 g Phenolharz vom Erweichungspunkt 104°C; OH-Zahl: 242; Säurezahl: 1,5; Chlorgehalt: 0,40 %.

## Beispiel 5

Durchführung wie Beispiel 1, jedoch wurde als Katalysator 1,8 g wasserfreies Eisentrichlorid und 1,8 g wasserfreies Zinkchlorid zugegeben. Man erhält 308 g Destillat und als Rückstand 399 g Phenolharz vom Erweichungspunkt 90°C; OH-Zahl: 245; Säurezahl: <1; Chlorgehalt: 1,20 %.

## Anwendung

Die folgenden Versuche dienen zur Erläuterung des Einsatzes der erfindungsgemäß zu verwendenden Phenolharze als Homogenisatoren für Kautschukmassen bzw. deren Vulkanisate.

Hierfür wurden folgende Prüfmischungen verwendet, die zweistufig hergestellt wurden. Der erste Teil der Mischungsherstellung wurde in einem Innenmischer (Kneter) durchgeführt. Hierbei wurden folgende Bestandteile gemischt, wobei als Homogenisatoren ein handelsübliches Bitumen-Harz (®Rhenosin 145 der Rheinchemie Rheinau) oder das Phenolharz aus Beispiel 1 eingesetzt wurde (Angaben in Teilen):

| | |
|---|---|
| Nitrilkautschuk (®Perbunan 3307) | 70,0 |
| Ethylenpropylenterpolymer (®Buna AP 451) | 30,0 |
| Zinkoxid WS | 5,0 |
| Stearinsäure | 1,0 |
| Ruß N 660 | 40,0 |
| Dioctylphthalat | 10,0 |
| 2,2'-Methylen-bis-(4-methyl-6-tert.-butylphenol) (®Vulkanox BKF der Bayer AG) | 1,0 |
| Homogenisatorharz | 5,0 |

Nach einer Mischzeit von 5 Min. wurde der Innenkneter entleert und die Teilmischung auf einem nachgeschalteten Walzwerk nach folgender Rezeptur fertiggemischt (Angaben in Teilen):

| Teilmischung | 162 |
|---|---|
| unlöslicher Schwefel (®Rhenocure IS 90/G) | 1,55 |
| Cyclohexylbenzthiazolsulfenamid (®Rhenogran CBS-80) | 1,25 |
| Tetramethylthiuramdisulfid (®Rhenogran TMTD-80) | 0,25 |

Die Vulkanisation der fertigen Mischungen erfolgte während 15 Min. bei 160°C und ergab folgende Produkteigenschaften:

| Prüfungen: | Vergleich 1: | Vergleich 2: | Vulkanisat mit Harz aus Beispiel 1 |
|---|---|---|---|
| | Homogenisatorharz-freies Vulkanisat | Vulkanisat mit Bitumenharz ®Rhenosin 145 | |
| Härte (Shore A) | 60 | 57 | 60 |
| Modul 100 (MPa) | 2,37 | 1,74 | 2,11 |
| Reißfestigkeit (MPa) | 10,2 | 9,5 | 10,5 |
| Bruchdehnung (%) | 390 | 546 | 447 |
| Weiterreißfestigkeit (N/mm) | 20 | 18,7 | 22,9 |

Die Alterung der Vulkanisate wurde während 7 Tage bei 100°C in einem Umluftofen durchgeführt.
In der folgenden Tabelle werden die Ergebnisse der Alterungsversuche wiedergegeben:

| Prüfungen: | Vergleich 1: | Vergleich 2: | Vulkanisat mit Harz aus Beispiel 1 |
|---|---|---|---|
| | Homogenisatorharz-freies Vulkanisat | Vulkanisat mit Bitumenharz ®Rhenosin 145 | |
| Härte (Shore A) | 66 + 10% | 62 + 9 % | 65 + 8% |
| Modul 100 (MPa) | 3,81 + 61% | 2,43 + 10% | 3,73 + 77% |
| Reißfestigkeit (MPa) | 9,8 - 4% | 8,3 - 14% | 9,5 - 10% |
| Bruchdehnung(%) | 230 - 41% | 408 - 34% | 254 - 43% |
| Weiterreißfestigkeit (N/mm) | 16,4 - 18% | 18,6 +/- 0 | 19,3 - 16% |

Ein Vergleich der Ergebnisse der Vulkanisatprüfungen läßt erkennen, daß sowohl vor als auch nach der Alterung die erfindungsgemäß zu verwendenden Phenolharze zu Produkten mit einer höheren Vernetzungsdichte (siehe Weiterreißfestigkeitswerte und Modul 100) führen und deshalb eine ausgezeichnete homogenisierende Wirkung aufweisen.

**Patentansprüche**

1. Verwendung von Phenolharzen, erhältlich durch Friedel-Crafts-Alkylierung von A) mindestens einem Phenol und/oder Bisphenol-A-Harz und B) mindestens einer Verbindung mit 4 bis 8 C-Atomen und 2 bis 4 funktionellen Gruppen aus der Reihe Chloratome und C=C-Doppelbindungen als Homogenisatoren für Kautschukvulkanisate.

2. Verwendung der Phenolharze nach Anspruch 1 in Mengen von 1 bis 50 Gew.-% Phenolharz, bezogen auf Kautschuk.

3. Verwendung der Phenolharze nach Anspruch 1 in Mengen von 3 bis 15 Gew.-% Phenolharz, bezogen auf Kautschuk.

4. Neue Novolak-artige Phenolharze aus der Umsetzung von Bisphenol-A-Rückstandsharzen mit Gemischen wenigstens teilweise chlorsubstituierter $C_4$- bis $C_8$-Kohlenwasserstoffe (Nebenprodukte der Butadienchlorierung) in Gegenwart von für Friedel-Crafts-Alkylierungen geeigneten Katalysatoren.

5. Neue Phenolharze nach Anspruch 4, dadurch gekennzeichnet, daß man als Bisphenol-A-Rückstandsharz ein Gemisch aus 5 bis 20 Gew.-% Phenol, 1 bis 37 Gew.-% Bisphenolen, 5 bis 40 Gew.-% Chromanen, 1 bis 25 Gew.-% Indanen, 1 bis 20 Gew.-% Trisphenolen und bis zu 10 Gew.-% anderen Produkten in geringen Anteilen einsetzt.

6. Neue Phenolharze nach Ansprüchen 4 und 5, dadurch gekennzeichnet, daß man Eisentrichlorid als Katalysator einsetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 444 277 (BAYER) <br> * Seite 2, Zeile 38 - Zeile 39 * <br> * Seite 3, Zeile 12 - Zeile 17 * <br> --- | 1-6 | C08L21/00 |
| Y,D | EP-A-0 444 275 (BAYER) <br> * Anspruch 1 * <br> --- | 1-6 | |
| A | US-A-5 021 522 (DURAIRAJ) <br> * Anspruch 1 * <br><br> ----- | 1 | |
| | | | **RECHERCHIERTE SACHGEBIETE (Int. Cl.5)** |
| | | | C08L |

Der vorliegende Recherchenbericht wurde für alle Patentansprüche erstellt

| Recherchenort | Abschlußdatum der Recherche | Prüfer |
|---|---|---|
| DEN HAAG | 12 MAERZ 1993 | LENTZ J.C. |